# EUROPEAN PATENT APPLICATION

(11) **EP 2 017 650 A1**
(43) Date of publication of application: **21.01.2009**
(21) Application number: 08158875.8
(22) Date of filing: 24.06.2008
(51) Int. Cl.: G01S 17/87

(54) **Target locator system**

(30) Priority: 26.06.2007 US 768520
(71) Applicant: Honeywell International Inc., Morristown NJ 07960 (US)
(72) Inventor: Lindquist, Erik, Minneapolis, MN 55401 (US); Jeerage, Mahesh K., New Brighton, MN 55112 (US)
(74) Representative: Buckley, Guy Julian

(57) **Abstract**

A target locator system comprises at least two target-locator cameras and a wireless communication system to communicatively couple the at least two target-locator cameras. Each target-locator camera includes a target sight to sight a target, a range finder, which is aligned with the target sight, configured to determine a distance to the target, a location sensor to determine a location associated with the range finder, at least one elevation angle sensor to determine an elevation angle of the axis of the target sight when sighting the target.

## Description

### CROSS REFERENCE TO RELATED APPLICATIONS

This application is related to United States Patent Applications Serial No. 11/268,938 (Attorney Docket No. H0008552.71550) having a title of "PASSIVE-OPTICAL LOCATOR" (also referred to here as the "11/268,938 Application") filed on November 8, 2005. This application is also related to United States Patent Applications Serial No. 11/482,354 (Attorney Docket No. H0011688.72862) having a title of "PASSIVE-OPTICAL LOCATOR" (also referred to here as the "H0011688.72862 Application"), and to United States Patent Applications Serial No. 11/482,468 (Attorney Docket No. H0011689.72861) having a title of "PASSIVE-OPTICAL LOCATOR" (also referred to here as the "H0011689.72861 Application"), both of which were filed on July 7, 2006.

### BACKGROUND

During some military operations, one or more soldiers locate targets to be fired upon by indirect fire systems or air support (for example) and transmit a location for the target to a fire control center or an integrated tactical network. The fire control center or an integrated tactical network then deploys a strike on the target using the target location. Target locators are used by military personnel to determine the coordinates of a target.

### SUMMARY

In a first embodiment, a target locator system comprises at least two target-locator cameras and a wireless communication system to communicatively couple the at least two target-locator cameras. Each target-locator camera includes a target sight, a range finder, a location sensor, and at least one elevation angle sensor. The target sight has an axis and sights a target. The range finder, which is aligned with the target sight, determines a distance to a target. The location sensor determines a location associated with the range finder. The at least one elevation angle sensor determines an elevation angle of an axis of the target sight when the target sight is sighting the target.

### DRAWINGS

Figures 1-3 are block diagrams of embodiments of target locator systems with respective targets in accordance with the present invention.

Figure 4 is a flow diagram of one embodiment of a method for determining a location of a target in accordance with the present invention.

Figures 5 and 6 are a top view and side view, respectively, of two target-locator cameras and a target in a terrain.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

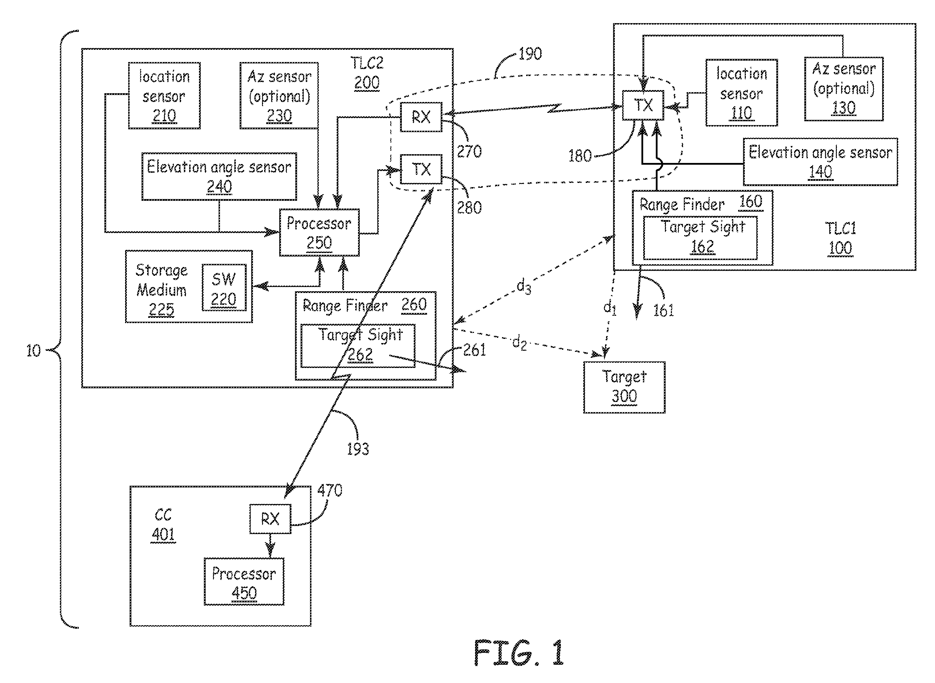

Figures 1-3 are block diagrams of embodiments of target locator systems 10-12 with respective targets 300 in accordance with the present invention. The target locator systems 10-12 include target-locator cameras that generate distance to target, elevation angle and in some cases azimuth information with respect to a target and location information of the target-locator cameras. The target-locator cameras each wirelessly transmit and/or receive at least a portion of that information and a processor in the target locator system determines an exact location of the target.

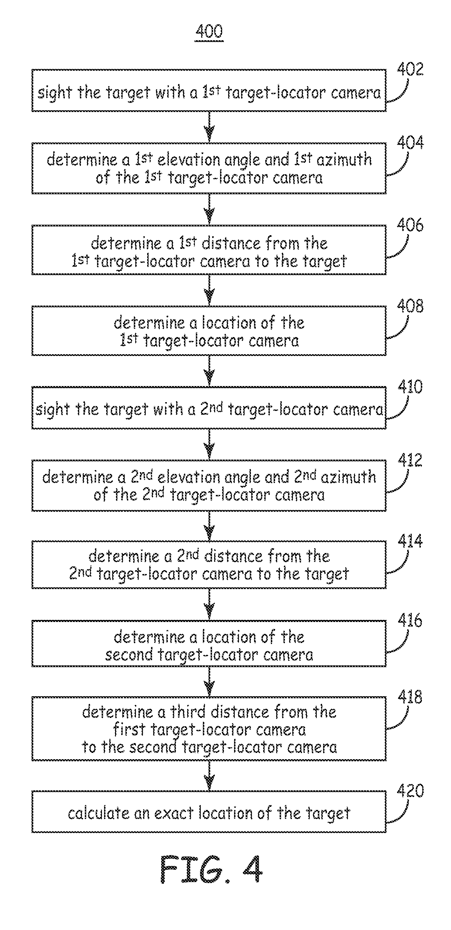

The method in which the target locator systems operate to determine the exact location of the target is described with reference to method 400 of Figure 4. In one implementation of this embodiment, the exact location is an exact geographic location of the target as represented by a latitude and a longitude of the target at the time the target is sighted by the target-locator camera. In another implementation of this embodiment, the exact location is an exact geographic location of the target as represented by the latitude, the longitude, and an altitude of the target at the time the target is sighted by the target-locator camera.

Figure 1 is a block diagram of an embodiment of a target locator system 10. The target locator system 10 comprises at least two target-locator cameras 100 and 200, a control center 401 and a wireless communication system to communicatively couple the at least two target-locator cameras 100 and 200 and the control center 401. The target-locator camera 100 is also referred to herein as the first target-locator camera 100. Likewise, the target-locator camera 200 is referred to herein as the second target-locator camera 200. The first target-locator camera 100 and the second target-locator camera 200 are separated by the distance represented generally by the dashed line labeled as d₃. The first target-locator camera 100 and the target 300 are separated by the distance represented generally by the line labeled as d₁. The second target-locator camera 200 and the target 300 are separated by the distance represented generally by the line labeled as d₂. The lines d₁, d₂, and d₃ form a triangle.

Each of the target-locator cameras 100 and 200 includes a respective range finder 160 and 260. The range finder 160 typically is aligned with a target sight 162. The target sight 162 has an axis 161. The range finder 160 generates information indicative of a distance d₁ between a first target-locator camera, such as target-locator camera 100, and the target 300 when the target sight 162 is aimed at the target 300. The range finder 260 is aligned with a target sight 262. The target sight 262 has an axis 261. The range finder 260 generates information indicative of a distance d₂ between the second target-locator camera, such as target-locator camera 200, and the target 300 when the target sight 262 is aimed at the target 300. When the target sights 162 and 262 are aimed at the target 300, the respective axes 161 and 261 are parallel to the line of sight between the target 300 and the respective range finders 160 and 260. In one implementation of this embodiment, the axes 161 and 261 are optical axes and the target sights 261 and 262 visually sight the target 300 for users of the target-locator cameras 100 and 200. In another implementation of this embodiment, the target sights 162 and/or 262 are optical target sights. In yet another implementation of this embodiment, the target sights 162 and/or 262 are infra-red target sights. In yet another implementation of this embodiment, the target sights 162 and/or 262 are external to the respective range finders 160 and/or 260, but are proximally located with and aligned to the respective range finders 160 and/or 260.

Each target-locator camera 100 and 200 includes a respective location sensor 110 and 210 to determine a location associated with the respective range finder 160 and 260. In one implementation of this embodiment, the location sensor is a global positioning system receiver and the location is a geographic location. The global positioning system for military applications is typically accurate to within 1 or 2 meters in both latitude and longitude. Each target-locator camera 100 and 200 includes at least one respective elevation angle sensor 140 and 240 to determine an elevation angle of a respective axis 161 or 261 of the target sight 162 or 262 when sighting the target 300.

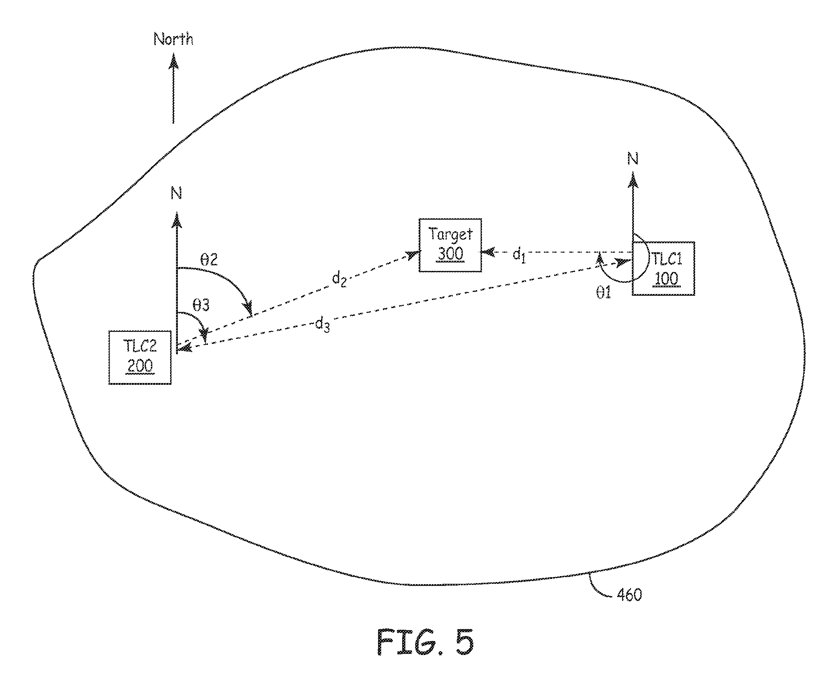

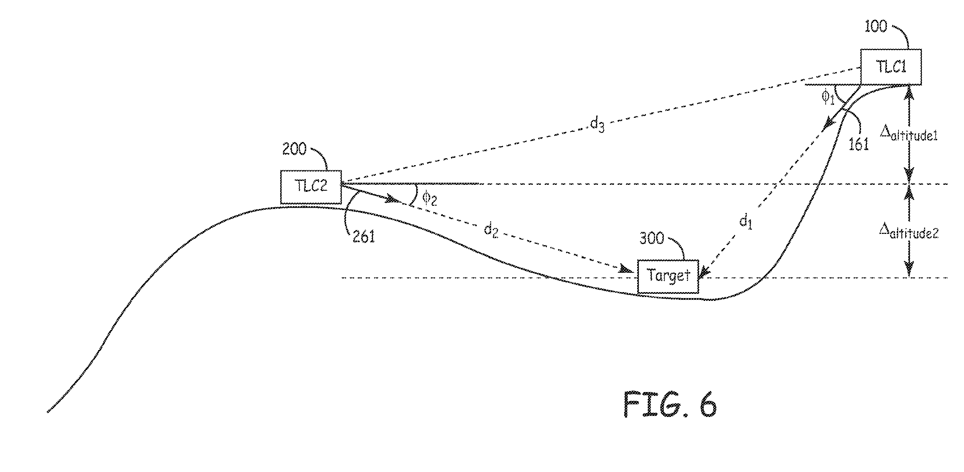

Each target-locator camera 100 and 200 includes at least one respective azimuth sensor 130 and 230 to determine an azimuth of the respective axis 161 or 261 when sighting the target 300. The sensitivity of the azimuth sensors does not need to be highly accurate since the readings from the two azimuth sensors 130 and 230 are used to determine on which side of the line d₃ the target is located. The elevation angle and the information indicative of distance, such as distance d₁ and distance d₂, provide two possible locations of the target 300 that are symmetric about the line d₃, as described below with reference to Figures 5 and 6. In one implementation of this embodiment, the azimuth sensors 130 and 230 are magnetometers which typically have an accuracy of 0 .5 to 5 degrees. In another implementation of this embodiment, the target-locator cameras 100 and 200 do not include the respective azimuth sensors 130 and 230.

As shown in Figure 1, the first target-locator camera 100 additionally includes a target-locator-camera transmitter 180. The target-locator camera 200 also includes a target-locator-camera transmitter 280, a target-locator-camera receiver 270, a processor 250, and software 220 embedded in storage medium 225. The software 220 comprises a set of program instructions embodied on the storage medium 225 from which at least a portion of the program instructions are read by the processor 250 for execution thereby. The program instructions, when executed by the processor 250, carry out at least a portion of the functionality described here as being performed by the target locator system 10. In one implementation, the processors 250 and 450 comprise a microprocessor or microcontroller. In one implementation, the processors 250 and 450 comprise processor support chips and/or system support chips such as ASICs or FPGAs. In another implementation of this embodiment, the processors 250 and 450 are programmable processors.

The control center (CC) 401 includes a control-center receiver 470 and a processor 450. As shown in Figure 1, the control-center receiver 470 is communicatively coupled to the target-locator-camera transmitter 280 in the target-locator camera 200 by the wireless communication link 193. In one implementation of this embodiment, the control center 401 communicates instructions to smart bombs and controls the flight of the smart bombs as they are guided toward the exact location of the target 300.

As shown in Figure 1, the wireless communication system includes the wireless communication link 190 between the target-locator-camera transmitter 180 in the first target-locator camera 100 and target-locator-camera receiver 270 in the target-locator camera 200. The wireless communication system additionally includes the wireless communication link 193 between the target-locator-camera transmitter 280 in the target-locator camera 200 and the control-center receiver 470 in the control center 401.

In the first target-locator camera 100, the location sensor 110, the azimuth sensor 130, the elevation angle sensor 140, and the range finder 160 are communicatively coupled to the target-locator-camera transmitter 180. In the second target-locator camera 200, the location sensor 210, the azimuth sensor 230, the elevation angle sensor 240, the range finder 260, the storage medium 225, the target-locator-camera receiver 270, and the target-locator-camera transmitter 280 are communicatively coupled to the processor 250.

As will be described in detail below with reference to Figures 4 and 5, the target-locator-camera transmitter 180 in the first target-locator camera 100 sends information indicative of the location of the first target-locator camera 100, the distance d₁ from the first target-locator camera 100 to the target 300, and the elevation angle and azimuth of the axis 161 of the target sight 162 when the target is sighted to the target-locator-camera receiver 270. The information is sent from the target-locator-camera transmitter 180 to target-locator-camera receiver 270 the via the wireless communication link 190. The "elevation angle and azimuth of the axis 161 of the target sight 162 when the target is sighted" is also referred to herein as the "first angular information." A target-locator-camera receiver 270 in the second target-locator camera 200 receives the information indicative of the location of the first target-locator camera 100, the distance d₁, and the first angular information and sends the information to the processor 250. The processor 250 also receives the location of the second target-locator camera 200 from the location sensor 210, the distance d₂ between the second target-locator camera 200 and the target 300 from the range finder 260. The processor 250 also receives the elevation angle and azimuth of the axis 261 of the target sight 262 when the target is sighted from the elevation angle sensor 240 and the azimuth sensor 230, respectively. The "elevation angle and azimuth of the axis 261 of the target sight 262 when the target is sighted" is also referred to herein as the "second angular information." Likewise, for any given target-locator camera the "elevation angle and azimuth of an axis of a target sight when the target is sighted" is also referred to herein as "angular information."

The processor 250 calculates an exact location of the target 300 based on the information indicative of the location of the first target-locator camera 100, the distance d₁, the first angular information, the location of the second target-locator camera 200, the distance d₂, and the second angular information. In one implementation of this embodiment, the processor 250 triangulates the exact location of the target 300 based on the information indicative of the location of the first target-locator camera 100, the distance d₁, the first angular information, the location of the second target-locator camera 200, the distance d₂, and the second angular information.

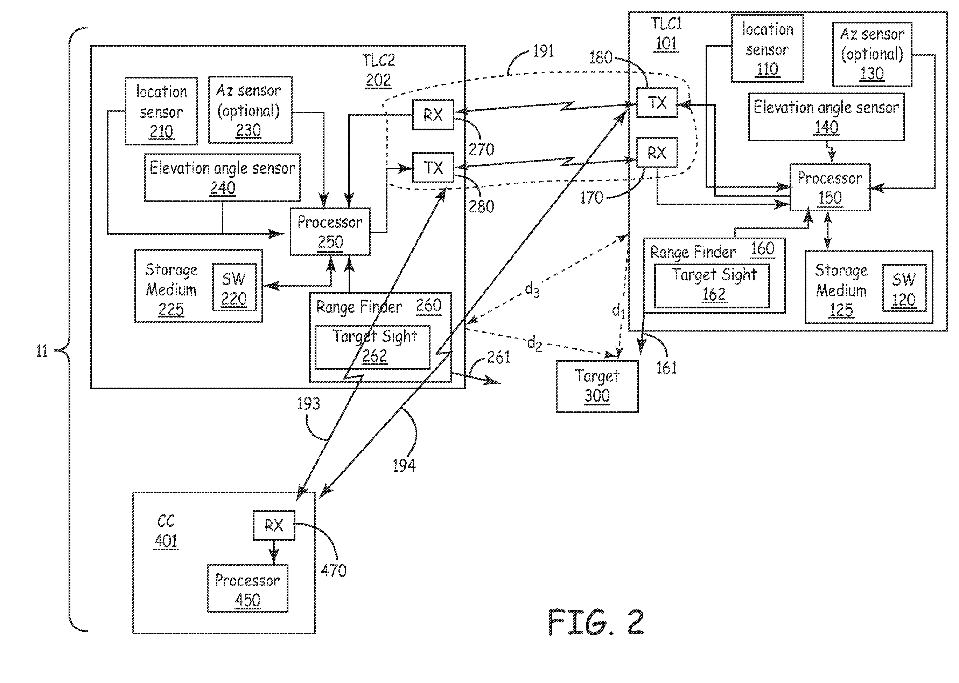

Figure 2 is a block diagram of an embodiment of a target locator system 11. The target locator system 11 comprises at least two target-locator cameras 101 and 202, a control center 401 and a wireless communication system to communicatively couple the at least two target-locator cameras 101 and 202 and the control center 401. The target-locator camera 101 is also referred to herein as the first target-locator camera 101. Likewise, the target-locator camera 202 is also referred to herein as the second target-locator camera 202. The first target-locator camera 101 and the second target-locator camera 202 are separated by the distance represented generally by the dashed line labeled as d₃. The first target-locator camera 101 and the target 300 are separated by the distance represented generally by the dashed line labeled as d₁. The second target-locator camera 202 and the target 300 are separated by the distance represented generally by the dashed line labeled as d₂.

The first target-locator camera 101 includes the range finder 160, the location sensor 110, at least one elevation angle sensor 140, at least one azimuth sensor 130, the target-locator-camera transmitter 180 (also referred to herein as a first target-locator-camera transmitter 180), a target-locator-camera receiver 170 (also referred to herein as a first target-locator-camera receiver 170), the processor 150, and software 120 embedded in the storage medium 125. The location sensor 110, the azimuth sensor 130, the elevation angle sensor 140, the range finder 160, the storage medium 125, and the first target-locator-camera receiver 170, and the first target-locator-camera transmitter 180 are communicatively coupled to the processor 150. In one implementation, the processor 150 comprises a microprocessor or microcontroller. In one implementation, the processor 150 comprises processor support chips and/or system support chips such as ASICs and FPGAs. In another implementation of this embodiment, the processor 150 is a programmable processor.

The second target-locator camera 202 includes the range finder 260, the location sensor 210, at least one elevation angle sensor 240, at least one azimuth sensor 230, the second target-locator-camera transmitter 280 (also referred to herein as a second target-locator-camera transmitter 280), the target-locator-camera receiver 270 (also referred to herein as the second target-locator-camera receiver 270), the processor 250, and software 220 embedded in the storage medium 225. The location sensor 210, the azimuth sensor 230, the elevation angle sensor 240, the range finder 260, the storage medium 225, the target-locator-camera receiver 270, and the target-locator-camera transmitter 280 are communicatively coupled to the processor 250.

The first target-locator-camera transmitter 180 is communicatively coupled to the second target-locator-camera receiver 270 via wireless communication link represented generally by the numeral 191. The second target-locator-camera transmitter 280 is communicatively coupled to the first target-locator-camera receiver 170 via the wireless communication link 191. In one implementation of this embodiment, the first target-locator-camera receiver 170 and the first target-locator-camera transmitter 180 comprise a first transceiver. In another implementation of this embodiment, the second target-locator-camera receiver 270 and the second target-locator-camera transmitter 280 comprise a second transceiver.

As shown in Figure 2, the wireless communication system includes the wireless communication link 191, the wireless communication link 193 between the second target-locator-camera transmitter 280 and the control-center receiver 470, and the wireless communication link 194 between the first target-locator-camera transmitter 180 and the control-center receiver 470.

The first target-locator camera 101 and the second target-locator camera 202 exchange the information generated at the respective azimuth sensors 130 and 230, elevation angle sensors 140 and 240, location sensors 110 and 210, and range finders 160 and 260. The processors 150 and 250 each calculate an exact location of the target 300 based on the information indicative of the location of the other at least one target-locator camera, information indicative of the distance from the other at least one target-locator camera to the target, and information indicative of the angular information of the other at least one target-locator camera, information indicative of the location of the target-locator camera, information indicative of the distance from the target-locator camera to the target, and information indicative of the angular information of the target-locator camera. Then the target-locator-camera transmitters 180 and 280 in each of the at least two target-locator cameras 101 and 202 transmit information indicative of the exact location of the target 300 from the respective target-locator-camera transmitters 180 and 280 via the respective wireless communication links 193 and 194 to the control-center receiver 470.

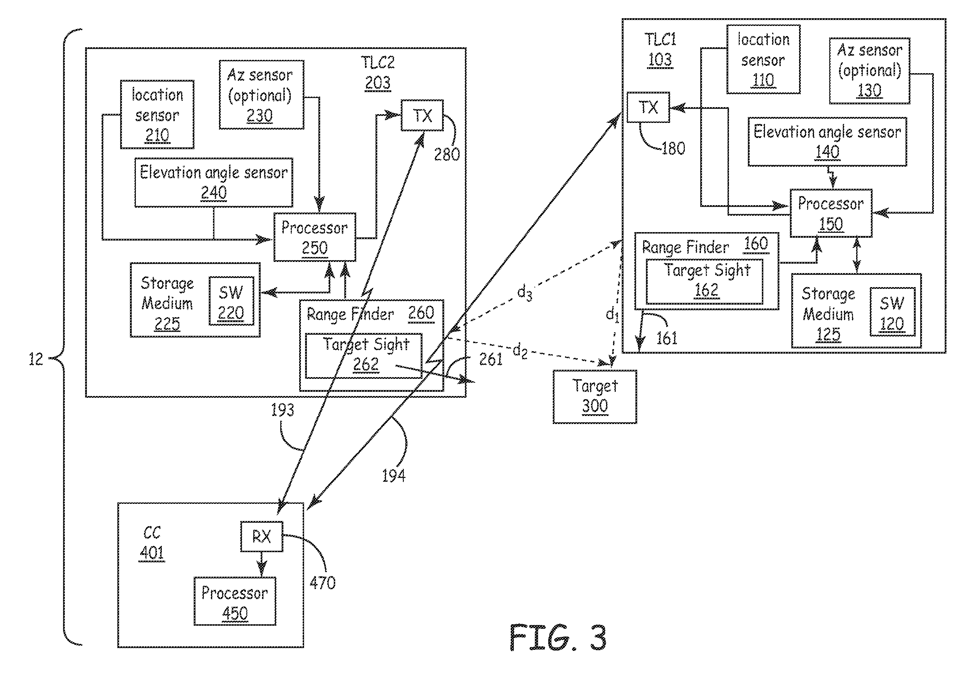

Figure 3 is a block diagram of an embodiment of a target locator system 12. The target locator system 12 comprises at least two target-locator cameras 103 and 203, a control center 401 and a wireless communication system to communicatively coupling the at least two target-locator cameras 103 and 203 and the control center 401. The target-locator camera 103 is also referred to herein as a first target-locator camera 103. The target-locator camera 203 is referred to herein as a second target-locator camera 203. The first target-locator camera 103 differs from the first target-locator camera 101 (Figure 2) in that there is no first target-locator-camera receiver 170 in the first target-locator camera 103. The second target-locator camera 203 differs from the second target-locator camera 202 (Figure 2) in that there is no second target-locator-camera receiver 270 in the second target-locator camera 203.

As shown in Figure 3, the wireless communication system in target locator system 12 includes the wireless communication link 193 between the second target-locator-camera transmitter 280 and the control-center receiver 470, and the wireless communication link 194 between the first target-locator-camera transmitter 180 and the control-center receiver 470. There is no wireless communication link between the first target-locator camera 103 and the second target-locator camera 203.

In this embodiment of the target locator system 12, the processors 150 and 250 each send the information generated by the respective azimuth sensors 130 and 230, the elevation angle sensors 140 and 240, the location sensors 110 and 210 and the range finders 160 and 260 to the control center receiver 470 in the control center 401. The processor 450 in the control center 401 receives the information from the control center receiver 470 and determines the exact location of the target 300 based on the information received from each of the target-locator cameras 103 and 203.

Embodiments of the method of operating the target locator systems 10-12 of Figures 1-3 are now described. Figure 4 is a flow diagram of one embodiment of a method 400 for determining a location of a target in accordance with the present invention. The implementation of method 400 is described with reference to Figures 5 and 6. Figures 5 and 6 are a top view and side view, respectively, of two target-locator cameras and a target in a terrain. In the exemplary case shown in Figure 5, the first azimuth angle θ₁ between the first target-locator camera 100 and the target 300 is shown with respect to the north direction and the second azimuth angle θ₂ between the second target-locator camera 200 and the target 300 is shown with respect to the north direction. The third azimuth angle θ₃ between the second target-locator camera 200 and the first target-locator camera 100 is shown with respect to the north direction.

The azimuth angle is the bearing, relative to true north, of a point on the horizon 460 directly beneath an observed object. The horizon is defined as a large imaginary circle centered on the observed object, equidistant from the zenith (point straight overhead) and the nadir (point exactly opposite the zenith). As seen from above the horizon 460, compass bearings are measured clockwise in degrees from north. Azimuth angles θ can thus range from 0 degrees (north) through 90 (east), 180 (south), 270 (west), and up to 360 (north again).

The azimuth angles are used to indicate if the target 300 is north or south of the line d₃. If θ₁ is greater than θ₃ + 180°, the target 300 is north of the line d₃. If θ₁ is less than θ₃ + 180°, the target 300 is south of the line d₃. If the line d₃ is parallel to the north-south axis, then if θ₁ is greater than θ₃ + 180°, the target 300 is west of the line d₃ and likewise, if θ₁ is less than θ₃ + 180°, the target 300 is east of the line d₃.

In the exemplary case shown in Figure 6, the first elevation angle φ₁ between the first target-locator camera 100 and the target 300 is shown and the second elevation angle φ₂ between the second target-locator camera 200 and the target 300 is shown. The first target-locator camera 100 is at an altitude that is Δ_{altitude1} greater than the altitude of the second target-locator camera 200. The target 300 is at altitude that is lower than the altitude of the second target-locator camera 200 by Δ_{altitude2}. Once it is determined whether the target 300 is north or south (or alternatively, west or east) of the line d₃, the elevation angles φ₁ and φ₂ of the axes of the target-locator cameras and the distances d₁ and d₂ are used to determine the exact location of the target 300.

At block 402, the first target-locator camera sights a target. A user of the first target-locator camera aims the target sight in the range finder of the first target-locator camera at the target in order to sight the target. In one implementation of this embodiment, the user of the first target-locator camera aims a target sight in an optical range finder at the target and focuses the target sight on the target. At block 404, the first target-locator camera determines a first elevation angle and a first azimuth of the first target-locator camera. As defined herein, the "first elevation angle and a first azimuth of the first target-locator camera" is the "first angular information" as described above with reference to Figure 1. In another implementation of block 404, the first target-locator camera determines a first elevation angle of the first target-locator camera, where the "first elevation angle of the first target-locator camera" is the "elevation angle of the axis of the target sight in the first target-locator camera when the target is sighted." In this latter embodiment, the first target-locator camera does not include an azimuth sensor.

The elevation angle sensor 130 (Figure 1) in the first target-locator camera 100 senses the first elevation angle φ₁ (also referred to herein as first elevation angle φ₁) of the axis 161 of the first target-locator camera 100 when the range finder 160 (Figure 1) is aimed at the target 300.

The azimuth sensor 130 in the first target-locator camera 100 senses the azimuth angle θ₁ (also referred to herein as first azimuth angle θ₁) of the axis 161 of the first target-locator camera 100 when the range finder 160 (Figure 1) is aimed at the target 300.

The first elevation angle φ₁ and the first azimuth angle θ₁ together comprise the first angular information of the axis 161 of the first target-locator camera 100. In one implementation of this embodiment, the azimuth sensor is a magnetometer. In another implementation of this embodiment, there is no azimuth sensor in the first target-locator camera 100 so that the azimuth is not sensed.

At block 406, the first target-locator camera determines a first distance from the first target-locator camera to the target. The first distance is determined by the range finder in the first target-locator camera.

At block 408, the first target-locator camera determines a location of the first target-locator camera. In one implementation of this embodiment, the processor in the first target-locator camera receives information indicative of the location of the first target-locator camera from a location sensor in the first target-locator camera.

At block 410, the second target-locator camera sights the target. A user of the second target-locator camera aims the target sight in the range finder of the second target-locator camera at the target in order to sight the target. In one implementation of this embodiment, the user of the second target-locator camera aims a target sight in an optical range finder at the target and focuses the target sight on the target. The target sighted by the second target-locator camera is the same target sighted by the first target-locator camera at block 402. If the target is moving, the sighting of the target by the first target-locator camera and the second target-locator camera is done at almost exactly the same time. In one implementation of this embodiment, if the target is a stationary object, such as a building, the sighting of the target by the first target-locator camera and the second target-locator camera can be done at different times.

At block 412, the second target-locator camera determines a second elevation angle and a second azimuth of the second target-locator camera. As defined herein, the "second elevation angle and a second azimuth of the second target-locator camera" is the "second angular information" as described above with reference to Figure 1. In another implementation of block 404, the second target-locator camera determines a second elevation angle of the second target-locator camera, where the "second elevation angle of the second target-locator camera" is the "elevation angle of the axis of the target sight in the first target-locator camera when the target is sighted." In this latter embodiment, the second target-locator camera does not include an azimuth sensor.

The elevation angle sensor 240 (Figure 1) in the second target-locator camera 200 senses the second elevation angle φ₂ (also referred to herein as second elevation angle φ₂) of the axis 261 of the second target-locator camera 200 when the range finder 260 (Figure 1) is aimed at the target 300.

The azimuth sensor 230 in the second target-locator camera 200 senses the second azimuth angle θ₂ (also referred to herein as second azimuth angle θ₂) of the axis 261 of the second target-locator camera 200 when the range finder 260 (Figure 1) is aimed at the target 300.

The second elevation angle φ₂ and the second azimuth angle θ₂ together comprise the second angular information of the axis 261 of the second target-locator camera 200. In one implementation of this embodiment, the azimuth sensor 230 is a magnetometer. In another implementation of this embodiment, there is no azimuth sensor 230 in the second target-locator camera 200 so that the azimuth is not sensed.

At block 414, the second target-locator camera determines a second distance from the second target-locator camera to the target. The second distance is determined by the range finder in the second target-locator camera.

At block 416, the second target-locator camera determines a location of the second target-locator camera. In one implementation of this embodiment, the processor in the second target-locator camera receives information indicative of the location of the second target-locator camera from a location sensor in the second target-locator camera.

At block 418, a processor in at least one of the first target-locator camera, the second target-locator camera, and/or the control center determines the third distance from the first target-locator camera to the second target-locator camera. The processor calculates the third distance based on the information indicative of the location of the first target-locator camera and the location of the second target-locator camera.

In one implementation of this embodiment of block 418, the transmitter in the first target-locator camera wirelessly transmits the first angular information, the first distance, and the first location of the first target-locator camera to the receiver in the second target-locator camera and the processor in the second target-locator camera uses the information indicative of the location of the first target-locator camera and the information indicative of the location of the second target-locator camera to determine the third distance.

In another implementation of this embodiment of block 418, the transmitter in the second target-locator camera wirelessly transmits the second angular information, the second distance, and the second location of the second target-locator camera to the receiver in the first target-locator camera and the processor in the first target-locator camera uses the information indicative of the location of the second target-locator camera and the information indicative of the location of the first target-locator camera to determine the third distance.

In yet another implementation of this embodiment of block 418, the transmitter in the first target-locator camera wirelessly transmits the first angular information, the first distance, and the first location of the first target-locator camera to the receiver in the control center while the transmitter in the second target-locator camera sends the second angular information, the second distance, and the second location of the second target-locator camera to the receiver in the control center. In this case, the processor in the control center uses the information indicative of the location of the second target-locator camera and the information indicative of the location of the first target-locator camera to determine the third distance. The third distance is a baseline distance of a triangle formed by the first distance, the second distance and the third distance.

At block 420, a processor in at least one of the first target-locator camera, the second target-locator camera, and/or the control center calculates an exact location of the target based on the third distance, the first elevation angle, the second elevation angle, the first distance, and the second distance. In one implementation of this embodiment of block 420, the transmitter in the first target-locator camera sends the first angular information, the first distance d₁, and the first location of the first target-locator camera to the receiver in the second target-locator camera and the processor in the second target-locator camera calculates an exact location of the target based on the information indicative of the location of the first target-locator camera, the distance from the first target-locator camera to the target, the angular information of the first target-locator camera, the location of the second target-locator camera, the distance from the second target-locator camera to the target, and the angular information of the second target-locator camera to determine the exact location of the target.

In another implementation of this embodiment of block 418, the transmitter in the second target-locator camera sends the second angular information, the second distance, and the second location of the second target-locator camera to the receiver in the first target-locator camera and the processor in the first target-locator camera calculates an exact location of the target based on the information indicative of the location of the first target-locator camera, the distance from the first target-locator camera to the target, the angular information of the first target-locator camera, the location of the second target-locator camera, the distance from the second target-locator camera to the target, and the angular information of the second target-locator camera to determine the exact location of the target.

In yet another implementation of this embodiment of block 418, the transmitter in the first target-locator camera sends the first angular information, the first distance, and the first location of the first target-locator camera to the receiver in the control center while the transmitter in the second target-locator camera sends the second angular information, the second distance, and the second location of the second target-locator camera to the receiver in the control center. In this case, the processor in the control center calculates an exact location of the target based on the information indicative of the location of the first target-locator camera, the distance from the first target-locator camera to the target, the angular information of the first target-locator camera, the location of the second target-locator camera, the distance from the second target-locator camera to the target, and the angular information of the second target-locator camera to determine the exact location of the target.

In yet another implementation of this embodiment, of method 400, the target locator system 10 (Figure 1) determines a location of a target 300. In such an embodiment, the first target-locator-camera transmitter 180 in the first target-locator camera 100 sends the first angular information, the first distance d₁, and the first location of the first target-locator camera 100 to the second target-locator-camera receiver 270 in the second target-locator camera 200. Then the processor 250 in the second target-locator camera 200 calculates an exact location of the target 300 based on the information indicative of the location of the first target-locator camera 100, the distance d₁ from the first target-locator camera 100 to the target 300, the angular information of the first target-locator camera 100, the location of the second target-locator camera 200, the distance d₂ from the second target-locator camera 200 to the target 300, and the angular information of the second target-locator camera 200 to determine the exact location of the target 300. The second transmitter 280 then sends the information indicative of the exact location of the target 300 to the control center 401.

In yet another implementation of this embodiment, of method 400, the target locator system 11 (Figure 2) determines a location of a target 300. In such an embodiment, the first target-locator-camera transmitter 180 in the first target-locator camera 100 sends the first angular information, the first distance d₁, and the first location of the first target-locator camera 101 to the second target-locator-camera receiver 270 in the second target-locator camera 200 and the second target-locator-camera transmitter 280 in the second target-locator camera 100 sends the second angular information, the second distance d₂, and the second location of the second target-locator camera 202 to the first target-locator-camera receiver 170 in the first target-locator camera 200. Then the processor 250 in the second target-locator camera 202 and the processor 150 in the first target-locator camera 101 each calculate an exact location of the target 300 based on the information indicative of the location of the first target-locator camera 101, the distance d₁ from the first target-locator camera 101 to the target 300, the angular information of the first target-locator camera 101, the location of the second target-locator camera 202, the distance d₂ from the second target-locator camera 202 to the target 300, and the angular information of the second target-locator camera 202 to determine the exact location of the target 300. The first transmitter 180 and the second transmitter 280 then each send the information indicative of the exact location of the target 300 to the control center 401. This process provides a backup in case one of the communication links between the target-locator cameras and the control center 401 is degraded or lost.

In yet another implementation of this embodiment, of method 400, the target locator system 12 (Figure 3) determines a location of a target 300. In such an embodiment, the first target-locator-camera transmitter 180 in the first target-locator camera 103 sends the first angular information, the first distance d₁, and the first location of the first target-locator camera 103 to the control center receiver 470 in control center 401. Likewise, the second target-locator-camera transmitter 280 in the second target-locator camera 103 sends the second angular information, the second distance d₂, and the second location of the second target-locator camera 203 to control center receiver 470 in control center 401. Then the processor 450 in the control center 401 calculates an exact location of the target 300 based on the information indicative of the location of the first target-locator camera 103, the distance d₁ from the first target-locator camera 103 to the target 300, the angular information of the first target-locator camera 103, the location of the second target-locator camera 203, the distance d₂ from the second target-locator camera 203 to the target 300, and the angular information of the second target-locator camera 203 to determine the exact location of the target 300.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory.

Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A target locator system (10) comprising:
at least two target-locator cameras (100), each target-locator camera including,
a target sight (162) to sight a target (300), the target sight having an axis (161);
a range finder (160) aligned with the target sight, the range finder configured to determine a distance (d₁) to the target,
a location sensor (110) to determine a location associated with the range finder,
at least one elevation angle sensor (140) to determine an elevation angle of the axis of the target sight when sighting the target; and
a wireless communication system (190) to communicatively couple the at least two target-locator cameras.

2. The target locator system (10) of claim 1, wherein each target-locator camera (130) further comprises at least one azimuth sensor (130) to determine an azimuth of the axis (161) of the target sight (162) when sighting the target (300).

3. The target locator system (10) of claim 2, wherein the at least one azimuth sensor (130) is a magnetometer.

4. The target locator system of claim 2, further comprising:
a control center (401) comprising a control-center receiver (470) communicatively coupled to the wireless communication system (193).

5. The target locator system (10) of claim 4, wherein the at least two target-locator cameras include a first target-locator camera (100) and a second target-locator camera (200),
wherein the wireless communication system comprises:
a target-locator-camera transmitter (180) in the first target-locator camera (100), the target-locator-camera transmitter configured to send information indicative of the location of the first target-locator camera, information indicative of the distance (d₁) from the first target-locator camera to the target (300), and information indicative of the elevation angle and the azimuth of the axis (161) of the target sight (162) in the first target-locator camera;
a target-locator-camera receiver (270) in the second target-locator camera (200), the target-locator-camera receiver configured to receive information indicative of the location of the first target-locator camera, information indicative of the distance from the first target-locator camera to the target, and information indicative of elevation angle and the azimuth of the axis of the target sight in the first target-locator camera, and
wherein the second target-locator camera further comprises:
a processor (250) to calculate an exact location of the target based on the information indicative of the location of the first target-locator camera, information indicative of the distance from the first target-locator camera to the target, information indicative of the elevation angle and the azimuth of the axis of the target sight in the first target-locator camera, information indicative of the location of the second target-locator camera, information indicative of the distance (d₂) from the second target-locator camera to the target, and information indicative of the elevation angle and the azimuth of the axis of the target sight in the second target-locator camera.

6. The target locator system of claim 5, wherein the target-locator-camera transmitter in the first target-locator camera is a first transmitter (180), wherein the wireless communication system further comprises:
a second target-locator-camera transmitter (280) in the second target-locator camera (200) communicatively coupled to the processor (250), the second target-locator-camera transmitter configured to transmit information indicative of the exact location of the target (300) to the control-center receiver (470).

7. The target locator system (11) of claim 4, wherein the wireless communication system in at least two of the at least two target-locator cameras (101) comprises:
a target-locator-camera transmitter (180) to send to the at least one other of the target-locator cameras (202) information indicative of the location of the target-locator camera (101), information indicative of the distance (d₁) from the target-locator camera to the target (300), and information indicative of the elevation angle and the azimuth of the axis (161) of the target sight (162) in the target-locator camera; and
a target-locator-camera receiver (170) to receive from the at least one other of the target-locator cameras (202) information indicative of the location of the other at least one target-locator camera, information indicative of the distance (d₂) from the other at least one target-locator camera to the target, and information indicative of the elevation angle and the azimuth of the axis (261) of the target sight (262) in the other at least one target-locator camera,
wherein each of the at least two target-locator cameras further comprise:
a processor (150) to calculate an exact location of the target based on the information indicative of the location of the other at least one target-locator camera, information indicative of the distance from the other at least one target-locator camera to the target, and information indicative of the elevation angle and the azimuth of the axis of the target sight in the other at least one target-locator camera, information indicative of the location of the target-locator camera, information indicative of the distance from the target-locator camera to the target, and information indicative of the elevation angle and the azimuth of the axis of the target sight in the target-locator camera,
wherein the target-locator-camera transmitters in each of the at least two target-locator cameras transmit information indicative of the exact location of the target to the control-center receiver (470).

8. The target locator system (10) of claim 4, wherein the wireless communication system comprises:
a target-locator-camera receiver (270) to receive information indicative of the location of the other at least one target-locator camera (100), information indicative of the distance (d₁) from the other at least one target-locator camera to the target (300), and information indicative of the elevation angle and the azimuth of the axis (161) of the target sight (162) in the other at least one target-locator camera; and
a target-locator-camera transmitter (180) to transmit the information indicative of the exact location of the target, and wherein at least one of the target-locator cameras comprises:
a processor (150) to calculate an exact location of the target based on the information indicative of the location of the other at least one target-locator camera, information indicative of the distance from the other at least one target-locator camera to the target, information indicative of the elevation angle and the azimuth of the axis of the target sight in the other at least one target-locator camera, information indicative of the location of the target-locator camera (200), information indicative of the distance (d₂) from the target-locator camera to the target; and information indicative of the elevation angle and the azimuth of the axis (261) of the target sight (262) in the target-locator camera,
wherein the target-locator-camera transmitter in one of the target-locator cameras transmit information indicative of the exact location of the target to the control-center receiver (470).

9. The target locator system of claim 1, further comprising:
a control center (401) comprising a control-center receiver (470) communicatively coupled to the wireless communication system (280), wherein the wireless communication system communicatively couples the control center to at least one target-locator camera (200).
